# FASCICULE DE BREVET EUROPEEN

(11) **EP 2 696 086 B1**
(45) Date de publication et mention de la délivrance du brevet: **30.11.2016**
(21) Numéro de dépôt: 13306118.4
(22) Date de dépôt: 02.08.2013
(51) Int. Cl.: F16B 39/32, F16B 39/24, F16B 39/10

(54) **ASSEMBLAGE COMPRENANT UN DISPOSITIF DE FREINAGE D'UNE FIXATION**
ANORDNUNG, DIE EINE BREMSVORRICHTUNG EINER BEFESTIGUNG UMFASST
ASSEMBLY INCLUDING A BRAKING DEVICE OF A FASTENER

(30) Priorité: 06.08.2012 FR 1257640
(43) Date de publication de la demande: 12.02.2014
(73) Titulaire: Airbus Opérations SAS, 31060 Toulouse (FR)
(72) Inventeur: Fournie, Jacques, 31330 GRENADE (FR); Dupas, Thony, 31100 TOULOUSE (FR)
(74) Mandataire: Fantin, Laurent

(56) Documents cités:
- EP-A1- 0 774 399
- GB-A- 230 282

## Description

La présente invention est relative à un assemblage dans lequel un élément de fixation utilisé pour fixer un support sur une structure doit être freiné en rotation (EP 0 774 399 A1).

Un aéronef comprend certaines pièces aérodynamiques extérieures, comme le radôme ou d'autres capotages extérieurs, qui sont montées mobiles par rapport à la structure fixe formée par le fuselage.

En raison de leur position extérieure, ces pièces subissent d'importants efforts mécaniques dont les forces aérodynamiques qui s'appliquent en vol au fuselage de l'aéronef.

Par conséquent, ces pièces extérieures mobiles doivent être reliées solidement et fermement à la structure fixe de l'aéronef, notamment lors de l'utilisation de ce dernier.

A cet effet, des éléments de fixation standard tels des vis sont utilisés, leur nombre et leur répartition étant adaptés pour assurer une liaison rigide.

Afin de garantir la tenue de l'assemblage pendant le fonctionnement de l'aéronef, les vis de fixation doivent être freinées par des moyens évitant leur desserrage.

Toutefois, selon une contrainte d'assemblage, et toujours en raison de la position extérieure de ces pièces mobiles, les vis de fixation sont uniquement accessibles depuis l'extérieur de l'aéronef et seulement à l'une de leurs extrémités : seulement la tête de vis ou l'écrou monté sur la vis peut être atteint.

Aussi, l'utilisation de moyens de freinage conventionnels de type écrou freiné n'est pas réalisable car ces moyens s'usent à long terme.

L'utilisation de rondelles à rabats n'est pas plus adaptée car les rabats peuvent présenter des risques de casse au bout d'un certain nombre de démontage et de remontage.

Enfin, l'utilisation de fil frein n'est pas envisageable du fait du nombre de vis et du temps important pour prendre les précautions nécessaires lors du démontage et du remontage du fil frein.

Selon d'autres contraintes d'assemblage, les éléments de fixation doivent être réutilisables, et dans la mesure du possible remplir leur fonction pendant toute la durée de vie de l'aéronef.

Et, selon des dernières contraintes d'assemblage, ces éléments de fixation sont situés en zone d'attachement foudre et ils doivent permettre la réalisation d'un assemblage compact.

Aussi, la présente invention vise à répondre aux contraintes d'assemblage précitées et à pallier les inconvénients de l'art antérieur.

A cet effet, l'invention a pour objet un assemblage comprenant un support fixé sur une structure par l'intermédiaire d'un élément de fixation s'étendant le long d'un axe de fixation, le support comprenant un alésage pour le passage de l'élément de fixation, l'élément de fixation comprenant une surface d'entraînement en rotation, et l'assemblage comprenant un dispositif de freinage en rotation de l'élément de fixation, le dispositif de freinage comprenant une extrémité mobile venant en appui contre la surface d'entraînement en rotation de l'élément de fixation lorsque ce dernier est mis en place dans l'alésage du support, et le dispositif de freinage étant conçu de telle manière qu'au repos, c'est-à-dire lorsque l'élément de fixation n'est pas présent dans l'alésage du support, l'extrémité mobile pénètre dans le volume normalement occupé par la surface d'entraînement en rotation de l'élément de fixation lorsque ce dernier est mis en place dans l'alésage du support.

Selon l'invention, l'assemblage se caractérise en ce que le dispositif de freinage est disposé entre le support et l'élément de fixation de manière à être déformé élastiquement par la surface d'entraînement en rotation lorsque l'élément de fixation est mis en place dans l'alésage du support, et en ce que l'extrémité mobile comprend des formes de verrouillage aptes à coopérer avec les formes extérieures de la surface d'entrainement pour arrêter l'élément de fixation en rotation autour de l'axe de fixation.

En réalisant un freinage combinant une déformation élastique et des formes de verrouillage, le dispositif de freinage de l'assemblage selon l'invention est réutilisable autant de fois que nécessaire.

De plus, grâce à ses moyens de fixation et à sa capacité de déformation, le dispositif de freinage reste en place et ne nécessite aucune précaution de montage.

D'autres caractéristiques et avantages ressortiront de la description qui va suivre de l'invention, description donnée à titre d'exemple uniquement, en regard des dessins annexés sur lesquels :
- la figure 1 est une représentation en perspective légèrement de côté d'un assemblage comprenant un dispositif de freinage selon l'invention,
- la figure 2 est une représentation en perspective légèrement de dessus d'un assemblage comprenant un dispositif de freinage selon l'invention,
- les figures 3 à 5 illustrent le principe de fonctionnement du dispositif de freinage selon l'invention.

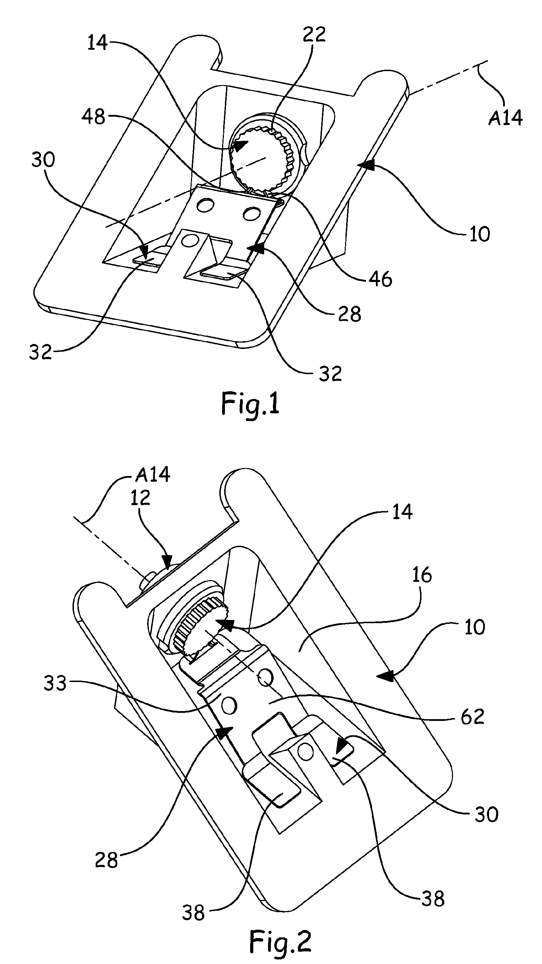

Comme illustré par les figures 1 et 2, la présente invention est relative à un assemblage comprenant un support 10 fixé sur une structure 12 par l'intermédiaire d'un élément de fixation 14.

Dans l'exemple représenté sur les figures 1 à 5, le support 10 est un boîtier 16 pouvant être intégré en périphérie d'une pièce mobile d'un aéronef, comme un radôme ou un autre capotage extérieur de formes aérodynamiques, afin de relier cette pièce mobile à la structure du fuselage de l'aéronef.

Toujours dans l'exemple illustré sur les figures 1 à 5, la structure 12 est représentée par un écrou 18, cet écrou étant généralement usiné ou fixé dans la structure de fuselage de l'aéronef lors de sa fabrication.

La présente invention couvre aussi des applications de l'assemblage décrit ci-dessous à d'autres domaines que l'aéronautique.

Pour la réalisation de cet assemblage, il est de préférence employé un élément de fixation 14 standard prenant la forme d'une vis, le support 10 comprenant un alésage 20 pour le passage de cet élément de fixation 14.

Aussi, de façon connue, cet élément de fixation 14 s'étend le long d'un axe de fixation A14 et il comprend une surface d'entraînement en rotation 22 à l'une de ses extrémités.

Afin d'être entraînée en rotation par un outil adapté, cette surface d'entraînement en rotation 22 comprend au moins deux faces extérieures (24,26) distinctes, c'est-à-dire séparées par des arêtes vives.

De préférence, cette surface d'entraînement en rotation 22 est hexagonale ou bi-hexagonale.

Afin d'assurer une fixation rigide et durable du support 10 sur la structure 12, l'assemblage comprend un dispositif de freinage 28 en rotation de l'élément de fixation 14.

Selon l'invention, le dispositif de freinage 28 est disposé entre le support 10 et l'élément de fixation 14 de manière à être déformé élastiquement par la surface d'entraînement en rotation 22 lorsque l'élément de fixation 14 est mis en place dans l'alésage 20 du support 10.

Ainsi, grâce à un placement approprié du dispositif de freinage 28 par rapport à la surface d'entraînement en rotation 22 de l'élément de fixation 14, on évite une déformation plastique du dispositif de freinage 28 qui conserve son élasticité et reste réutilisable après de nombreux démontage et remontage de l'assemblage. En vue d'être maintenu dans la position appropriée par rapport à la surface d'entraînement en rotation 22 de l'élément de fixation 14, le dispositif de freinage 28 est solidarisé au support 10 par ses propres moyens de fixation 30. Ainsi, le positionnement du dispositif de freinage 28 est indépendant de la mise en place de l'élément de fixation 14.

Parallèlement, et grâce à ses moyens de fixation 30, le dispositif de freinage 28 fonctionne en se déformant indépendamment du couple de serrage de l'élément de fixation 14, ce qui n'est pas le cas avec des rondelles élastiques par exemple. Pour la réalisation de ses moyens de fixation 30, le dispositif de freinage 28 comprend une extrémité fixe 32 solidarisée au support 10, la partie restante du dispositif de freinage 28 formant la partie mobile 33 de ce dernier.

Afin de permettre un débattement du dispositif de freinage 28 par rapport à la surface d'entraînement en rotation 22, l'extrémité fixe 32 du dispositif de freinage 28 est déportée par rapport à l'axe de fixation A14.

Plus précisément, le déport D de l'extrémité fixe 32 du dispositif de freinage 28 par rapport à l'axe de fixation A14 est tel qu'il permet une déformation élastique du dispositif de freinage 28 par rapport à la surface d'entraînement en rotation 22.

Dans un mode de réalisation préféré de l'assemblage selon l'invention visant à obtenir un assemblage compact, le support 10 comprend une face latérale 34 perpendiculaire à une face principale 36 au travers de la laquelle est réalisé l'alésage de fixation 20, et l'extrémité fixe 32 du dispositif de freinage 28 est solidarisée à cette face latérale 34 du support.

Dans ce mode de réalisation préféré, le déport D de l'extrémité fixe 32 du dispositif de freinage 28 comprend deux composantes : une composante latérale D1 perpendiculaire à l'axe de fixation A14 et correspondant à la distance entre l'axe de fixation A14 et la face latérale 34, et une composante longitudinale D2 parallèle à l'axe de fixation A14 et correspondant à la distance entre la face principale 36 et l'extrémité fixe 32.

De préférence, l'extrémité fixe 32 est soudée ou rivetée au support 10. Toutefois, d'autres moyens de fixation sont envisageables, et les variantes qui en découlent sont couvertes par la présente invention.

Pour la mise en oeuvre de cette fixation, et dans le mode de réalisation préféré de l'assemblage avec un déport D de l'extrémité fixe 32 à deux composantes (D1, D2), l'extrémité fixe 32 prend la forme d'au moins une patte de fixation 38 pliée par rapport à la partie mobile 33 du dispositif de freinage 28.

Ainsi, le dispositif de freinage 28 se déforme principalement dans la portion de jonction 40 entre l'extrémité fixe 32 et la partie mobile 33.

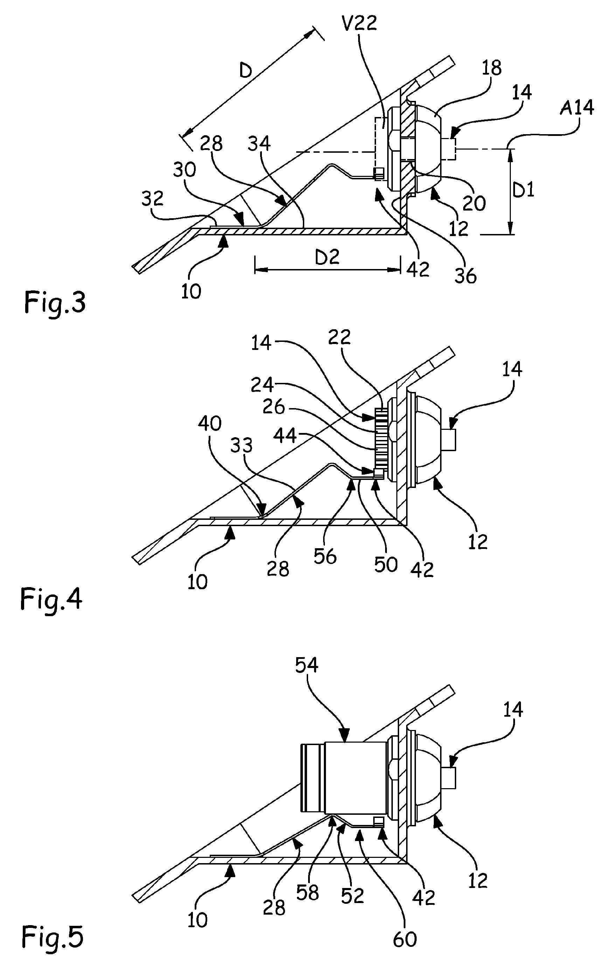

Comme illustré par la figure 4, et afin de réaliser le freinage en rotation de l'élément de fixation 14, le dispositif de freinage 28 comprend une extrémité mobile 42 venant en appui contre la surface d'entraînement en rotation 22 de l'élément de fixation 14 lorsque ce dernier est mis en place dans l'alésage 20 du support 10.

Afin de maintenir l'extrémité mobile 42 en pression contre la surface d'entraînement en rotation 22 de l'élément de fixation 14 lorsqu'il est placé dans l'alésage 20 du support 10, et comme illustré en traits interrompus en figure 3, le dispositif de freinage 28 est conçu de telle manière qu'au repos, c'est-à-dire lorsque l'élément de fixation 14 n'est pas présent dans l'alésage 20 du support 10, l'extrémité mobile 42 pénètre dans le volume V22 normalement occupé par la surface d'entraînement en rotation 22 de l'élément de fixation 14 lorsque ce dernier est mis en place dans l'alésage 20 du support 10.

Selon une caractéristique importante de la présente invention, l'extrémité mobile 42 comprend des formes de verrouillage aptes à coopérer avec les formes extérieures de la surface d'entrainement 22 pour arrêter l'élément de fixation 14 en rotation autour de l'axe de fixation A14.

Plus en détails, les formes de verrouillage de l'extrémité mobile 42 sont en appui sous pression sur les formes extérieures de la surface d'entrainement en rotation 22 de l'élément de fixation 14.

Cet appui sous pression est dû à la résistance mécanique et à l'élasticité du matériau dans lequel est réalisé le dispositif de freinage 28, cette résistance mécanique et cette l'élasticité s'opposant à la déformation du dispositif de freinage 28 par la surface d'entraînement en rotation 22 lorsque l'élément de fixation 14 est mis en place dans l'alésage 20 du support 10.

De préférence, la surface d'entrainement en rotation 22 de l'élément de fixation 14 n'étant pas de révolution, les formes de verrouillage de l'extrémité mobile 42 sont constituées par des ergots de verrouillage 44 aptes à coopérer avec les formes extérieures de la surface d'entrainement 22 pour arrêter l'élément de fixation 14 en rotation autour de l'axe de fixation A14.

Dans un mode de réalisation préféré du dispositif de freinage 28, les ergots de verrouillage 44 prennent la forme de deux plis de matière 46,48 découpés dans l'extrémité mobile 42, s'élevant vers la surface d'entrainement en rotation 22 de l'élément de fixation 14 et se faisant face.

Toujours dans un mode de réalisation préféré du dispositif de freinage 28, et afin que les ergots de verrouillage 44 viennent perpendiculairement en contact contre la surface d'entrainement en rotation 22 de l'élément de fixation 14, l'extrémité mobile 42 prend la forme d'une partie 50 plate et parallèle à l'axe de fixation A14, la partie plate 50 étant obtenue par la réalisation d'un premier pli 56 par rapport au reste de la partie mobile 33 du dispositif de freinage 28.

En complément dans la conception du dispositif de freinage 28, l'extrémité mobile 42 est précédée par une surélévation 52 permettant d'éloigner l'extrémité mobile 42 de la surface d'entraînement en rotation 22 lorsqu'un outil d'entraînement en rotation 54, tel une douille, est placé sur ladite surface 22, comme l'illustre la figure 5.

Dans un mode de réalisation préféré du dispositif de freinage 28, l'extrémité mobile 42 prenant la forme d'une partie 50 obtenue par la réalisation d'un premier pli 56 par rapport au reste de la partie mobile 33 du dispositif de freinage 28, la surélévation 52 est obtenue par la réalisation d'un deuxième pli 58 précédant le premier pli 56.

Plus précisément, le deuxième pli 58 et le premier pli 56 permettent de former un décrochement 60 permettant d'éloigner la partie 50 de l'axe de fixation 14, et donc de la surface d'entraînement en rotation 22.

Toujours dans un mode de réalisation préféré et illustré du dispositif de freinage 28, ce dispositif de freinage 28 prend la forme d'une lame métallique 62, l'épaisseur et le matériau de cette lame métallique 62 étant choisis en fonction de l'effort de freinage souhaité sur la surface d'entraînement en rotation 22.

Enfin, la présente invention couvre un aéronef comprenant un assemblage tel qu'il vient d'être décrit entre une pièce mobile et une pièce structurale, le support 10 pouvant par exemple être intégré à la pièce mobile et la pièce structurale étant assimilée à la structure 12.

## Revendications

1. Assemblage comprenant un support (10) fixé sur une structure (12) par l'intermédiaire d'un élément de fixation (14) s'étendant le long d'un axe de fixation (A14), le support (10) comprenant un alésage (20) pour le passage de l'élément de fixation (14), l'élément de fixation (14) comprenant une surface d'entraînement en rotation (22), et l'assemblage comprenant un dispositif de freinage (28) en rotation de l'élément de fixation (14), le dispositif de freinage (28) comprenant une extrémité mobile (42) venant en appui contre la surface d'entraînement en rotation (22) de l'élément de fixation (14) lorsque ce dernier est mis en place dans l'alésage (20) du support (10), et le dispositif de freinage (28) étant conçu de telle manière qu'au repos, c'est-à-dire lorsque l'élément de fixation (14) n'est pas présent dans l'alésage (20) du support (10), l'extrémité mobile (42) pénètre dans le volume (V22) normalement occupé par la surface d'entraînement en rotation (22) de l'élément de fixation (14) lorsque ce dernier est mis en place dans l'alésage (20) du support (10), l'assemblage étant **caractérisé en ce que** le dispositif de freinage (28) est disposé entre le support (10) et l'élément de fixation (14) de manière à être déformé élastiquement par la surface d'entraînement en rotation (22) lorsque l'élément de fixation (14) est mis en place dans l'alésage (20) du support (10), et **en ce que** l'extrémité mobile (42) comprend des formes de verrouillage (44) qui coopèrent avec les formes extérieures de la surface d'entrainement en rotation (22) pour arrêter l'élément de fixation (14) en rotation autour de l'axe de fixation (A14).

2. Assemblage selon la revendication précédente, dans lequel, la surface d'entrainement en rotation (22) de l'élément de fixation (14) n'étant pas de révolution, l'extrémité mobile (42) comprend des ergots de verrouillage (44) aptes à coopérer avec les formes extérieures de la surface d'entrainement (22) pour arrêter l'élément de fixation (14) en rotation autour de l'axe de fixation (A14).

3. Assemblage selon la revendication précédente, dans lequel les ergots de verrouillage (44) prennent la forme de deux plis de matière (46,48) découpés dans l'extrémité mobile (42), s'élevant vers la surface d'entrainement en rotation (22) de l'élément de fixation (14) et se faisant face.

4. Assemblage selon l'une des revendications précédentes, dans lequel le dispositif de freinage (28) est solidarisé au support (10) par ses propres moyens de fixation (30).

5. Assemblage selon la revendication précédente, dans lequel le dispositif de freinage (28) comprend une extrémité fixe (32) solidarisée au support (10), la partie restante du dispositif de freinage (28) formant la partie mobile (33) de ce dernier.

6. Assemblage selon la revendication précédente, dans lequel l'extrémité fixe (32) du dispositif de freinage (28) est déportée par rapport à l'axe de fixation (A14), le déport (D) de l'extrémité fixe (32) du dispositif de freinage (28) par rapport à l'axe de fixation (A14) étant tel qu'il permet une déformation élastique du dispositif de freinage (28) par rapport à la surface d'entraînement en rotation (22).

7. Assemblage selon la revendication précédente, dans lequel le support (10) comprend une face latérale (34) perpendiculaire à une face principale (36) au travers de la laquelle est réalisée l'alésage de fixation (20), et dans lequel l'extrémité fixe (32) du dispositif de freinage (28) est solidarisée à cette face latérale (34) du support, le déport (D) de l'extrémité fixe (32) du dispositif de freinage (28) comprenant deux composantes : une composante latérale (D1) perpendiculaire à l'axe de fixation (A14) et correspondant à la distance entre l'axe de fixation (A14) et la face latérale (34), et une composante longitudinale (D2) parallèle à l'axe de fixation (A14) et correspondant à la distance entre la face principale (36) et l'extrémité fixe (32).

8. Assemblage selon l'une des revendications précédentes, dans lequel l'extrémité mobile (42) est précédée par une surélévation (52) permettant d'éloigner l'extrémité mobile (42) de la surface d'entraînement en rotation (22) lorsqu'un outil d'entrainement en rotation (54) est placé sur ladite surface (22).

9. Assemblage selon l'une des revendications précédentes, dans lequel le dispositif de freinage (28) prend la forme d'une lame métallique (62), l'épaisseur et le matériau de cette lame métallique (62) étant choisis en fonction de l'effort de freinage souhaité sur la surface d'entraînement en rotation (22).

10. Aéronef comprenant un assemblage entre une pièce mobile et une pièce structurale réalisé selon l'une des revendications précédentes.

## Patentansprüche

1. Anordnung mit einer Halterung (10), die an einer Struktur (12) mit Hilfe eines Befestigungselements (14) befestigt ist, das sich entlang einer Befestigungsachse (A14) erstreckt, wobei die Halterung (10) eine Durchführung (20) für das Hindurchführen des Befestigungselements (14) aufweist, das Befestigungselement (14) eine Drehantriebsfläche (22) aufweist und die Anordnung eine Bremsvorrichtung (28) für die Drehung des Befestigungselements (14) aufweist, wobei die Bremsvorrichtung (28) ein bewegliches Ende (42) umfasst, das sich gegen die Drehantriebsfläche (22) des Befestigungselements (14) abstützt, wenn Letzteres in die Durchführung (20) der Halterung (10) eingebracht ist, und wobei die Bremsvorrichtung (28) derart eingerichtet ist, dass im Ruhezustand, das heißt, wenn das Befestigungselement (14) nicht in der Durchführung (20) der Halterung (10) vorhanden ist, das bewegliche Ende (42) in das Volumen (V22) eindringt, das normalerweise durch die Drehantriebsfläche (22) des Befestigungselements (14) eingenommen ist, wenn Letzteres in die Durchführung (20) der Halterung (10) eingebracht ist, wobei die Anordnung **dadurch gekennzeichnet ist, dass** die Bremsvorrichtung (28) zwischen der Halterung (10) und dem Befestigungselement (14) derart angeordnet ist, dass diese durch die Drehantriebsfläche (22) elastisch verformt ist, wenn das Befestigungselement (14) in die Durchführung (20) der Halterung (10) eingebracht ist, und dass das bewegliche Ende (42) Verriegelungsformen (44) aufweist, die mit den äußeren Formen der Drehantriebsfläche (22) zusammenwirken, um das Befestigungselement (14) bezüglich einer Drehung um die Befestigungsachse (A14) festzuhalten.

2. Anordnung nach dem vorhergehenden Anspruch, bei der die Drehantriebsfläche (22) des Befestigungselements (14) keine Rotationsfläche ist und das bewegliche Ende (42) Verriegelungsvorsprünge (44) aufweist, die dazu geeignet sind, mit äußeren Formen der Drehantriebsfläche (22) zusammenzuwirken, um das Befestigungselement (14) bezüglich einer Drehung um die Drehbefestigungsachse (A14) festzuhalten.

3. Anordnung nach dem vorhergehenden Anspruch, bei der die Verriegelungsvorsprünge (44) als zwei Materialverbiegungen (46, 48) ausgestaltet sind, die am beweglichen Ende (42) ausgeschnitten sind, sich zur Drehantriebsfläche (22) des Befestigungselements (14) erheben und sich gegenüberliegen.

4. Anordnung nach einem der vorhergehenden Ansprüche, bei der die Bremsvorrichtung (28) an der Halterung (10) durch ihre eigenen Befestigungsmittel (30) fest verbunden ist.

5. Anordnung nach dem vorhergehenden Anspruch, bei der die Bremsvorrichtung (28) ein festes Ende (32) aufweist, das mit der Halterung (10) fest verbunden ist, wobei der Restbereich der Bremsvorrichtung (28) den beweglichen Teil (33) von Letzterer bildet.

6. Anordnung nach dem vorhergehenden Anspruch, bei der das feste Ende (32) der Bremsvorrichtung (28) bezügliche der Befestigungsachse (A14) versetzt ist, wobei der Versatz (D) des festen Endes (32) der Bremsvorrichtung (28) bezüglich der Bremsachse (A14) derart ist, dass dieser eine elastische Verformung der Bremsvorrichtung (28) bezüglich der Drehantriebsfläche (22) gestattet.

7. Anordnung nach dem vorhergehenden Anspruch, bei der die Halterung (10) eine seitliche Fläche (34) aufweist, die im rechten Winkel zu einer Hauptfläche (36) ausgerichtet ist, durch die hindurch die Durchführung (20) für die Befestigung ausgebildet ist, und bei der das feste Ende (32) der Bremsvorrichtung (28) fest mit der seitlichen Fläche (34) der Halterung verbunden ist, wobei der Versatz (D) des festen Endes (32) der Bremsvorrichtung (28) zwei Komponenten aufweist: eine seitliche Komponente (D1) die im rechten Winkel zur Befestigungsachse (A14) ausgerichtet ist und die Entfernung zwischen der Befestigungsachse (A14) und der Seitenfläche (34) entspricht, und eine Längskomponente (D2), die parallel zur Befestigungsachse (A14) ausgerichtet ist und der Entfernung zwischen der Hauptseite (36) und dem festen Ende (32) entspricht.

8. Anordnung nach einem der vorhergehenden Ansprüche, bei der dem beweglichen Ende (42) eine Erhebung (52) vorangeht, die es gestattet, das bewegliche Ende (42) von der Drehantriebsfläche (22) zu entfernen, wenn ein Drehantriebswerkzeug (54) auf dieser Oberfläche (22) aufgesetzt wird.

9. Anordnung nach einem der vorhergehenden Ansprüche, bei der die Bremsvorrichtung (28) als metallische Zunge (62) ausgebildet ist, wobei die Dicke und das Material dieser metallischen Zunge (62) in Abhängigkeit von der gewünschten Bremswirkung auf der Drehantriebsfläche (22) gewählt sind.

10. Luftfahrzeug mit einer Anordnung zwischen einem beweglichen Teil und einem Strukturteil, die nach einem der vorhergehenden Ansprüche ausgeführt ist.

## Claims

1. Assembly comprising a support (10) fastened to a structure (12) by means of a fastening element (14) extending along a fastening axis (A14), the support (10) comprising a bore (20) for the passage of the fastening element (14), the fastening element (14) comprising a surface for driving in rotation (22), and the assembly comprising a device (28) for locking in rotation the fastening element (14), the locking device (28) comprising a moveable end (42) resting against the surface (22) for driving in rotation the fastening element (14) when the latter is put in place in the bore (20) of the support (10), and the locking device (28) being designed so that, at rest, that is to say when the fastening element (14) is not present in the bore (20) of the support (10), the moveable end (42) enters into the volume (V22) normally occupied by the surface (22) for driving in rotation the fastening element (14) when the latter is put in place in the bore (20) of the support (10), the assembly being **characterized in that** the locking device (28) is placed between the support (10) and the fastening element (14) so as to be deformed elastically by the surface (22) for driving in rotation when the fastening element (14) is put in place in the bore (20) of the support (10), and **in that** the moveable end (42) comprises locking shapes (44) capable of interacting with the external shapes of the driving surface (22) in order to stop the fastening element (14) from rotating about the fastening axis (A14).

2. Assembly according to the preceding claim, in which, since the surface (22) for driving in rotation the fastening element (14) is not of revolution, the moveable end (42) comprises locking lugs (44) capable of interacting with the external shapes of the driving surface (22) in order to stop the fastening element (14) from rotating about the fastening axis (A14).

3. Assembly according to the preceding claim, in which the locking lugs (44) take the form of two folds of materials (46, 48) cut in the moveable end (42), rising to the surface for driving in rotation (22) the fastening element (14) and facing one another.

4. Assembly according to one of the preceding claims, in which the locking device (28) is secured to the support (10) by its own fastening means (30).

5. Assembly according to the preceding claim, in which the locking device (28) comprises a fixed end (32) secured to the support (10), the remaining portion of the locking device (28) forming the moveable portion (33) of the latter.

6. Assembly according to the preceding claim, in which the fixed end (32) of the locking device (28) is offset relative to the fastening axis (A14), the offset (D) of the fixed end (32) of the locking device (28) relative to the fastening axis (A14) being such that it allows an elastic deformation of the locking device (28) relative to the surface (22) for driving in rotation.

7. Assembly according to the preceding claim, in which the support (10) comprises a lateral face (34) perpendicular to a main face (36) through which the fastening bore (20) is made, and in which the fixed end (32) of the locking device (28) is secured to this lateral face (34) of the support, the offset (D) of the fixed end (32) of the locking device (28) comprising two components: a lateral component (D1) perpendicular to the fastening axis (A14) and corresponding to the distance between the fastening axis (A14) and the lateral face (34), and a longitudinal component (D2) parallel to the fastening axis (A14) and corresponding to the distance between the main face (36) and the fixed end (32).

8. Assembly according to one of the preceding claims, in which the moveable end (42) is preceded by a raised portion (52) making it possible to move the moveable end (42) away from the surface (22) for driving in rotation when a rotation-driving tool (54) is placed on the said surface (22).

9. Assembly according to one of the preceding claims, in which the locking device (28) takes the form of a metal strip (62), the thickness and the material of this metal strip (62) being chosen as a function of the desired locking force on the surface (22) for driving in rotation.

10. Aircraft comprising an assembly between a moveable part and a structural part produced according to one of the preceding claims.
